# EUROPEAN PATENT APPLICATION

(11) **EP 4 607 027 A1**
(43) Date of publication of application: **27.08.2025**
(21) Application number: 25154839.2
(22) Date of filing: 29.01.2025
(51) Int. Cl.: F04B 15/02, B01F 27/92, B01F 33/80, F04B 43/00

(54) **HIGH-VISCOSITY BINDER CONVEYING SYSTEM AND LITHIUM BATTERY SLURRY PRODUCTION LINE**

(30) Priority: 30.01.2024 CN 202410133688
(71) Applicant: Guangdong Sophon Intelligent Technology Co., Ltd, Dongguan City Guangdong (CN); Sophon Technology (Hungary) Co. Kft., 1054 Budapest (HU)
(72) Inventor: LIU, Zihao, Dongguan (CN); SUN, Guiyue, Dongguan (CN); DUAN, Zhen, Dongguan (CN); WANG, Xiangtao, Dongguan (CN)
(74) Representative: JD&P Patent Attorneys Joanna Dargiewicz & Partners

(57) **Abstract**

Disclosed is a high-viscosity binder conveying system and a lithium battery slurry production line. The high-viscosity binder conveying system includes a storage tank (100) and a conveying pipeline (200), wherein an input end of the conveying pipeline is connected to the bottom of the storage tank. The high-viscosity binder conveying system further includes a pressurizing device (300), wherein the pressurizing device is connected to the storage tank and configured to fill a positive pressure into the storage tank. The conveying pipeline includes an input pipe (210) and an output pipe (220), wherein an input end of the input pipe is connected to the bottom of the storage tank. The high-viscosity binder conveying system further includes a kneading peristaltic rotor pump (400), wherein an input end of the kneading peristaltic rotor pump is connected to an output end of the input pipe, and an output end of the kneading peristaltic rotor pump is connected to an input end of the output pipe. In this way, the positive pressure and the kneading peristaltic rotor pump work together to convey a high-viscosity binder, thereby suppressing the quality deterioration of the high-viscosity binder and improving the quality of the high-viscosity binder.

## Description

### FIELD

The present disclosure relates to the technical field of conveying systems and, in particular, to a high-viscosity binder conveying system and a lithium battery slurry production line.

### BACKGROUND

The front end of a material conveying system is generally provided with a storage tank for storing material. Generally, a spiral extrusion structure is provided in the storage tank, and the material in the storage tank is extruded by the rotation of the spiral extrusion structure. An example is a cage-type dynamic forced extraction pot disclosed in CN104826358A. However, for high-viscosity binders, i.e., liquid glue, with a viscosity of 800,000-1,000,000 cP, due to the high viscosity, the spiral extrusion structure will idle, causing the motor to burn out. As a result, the spiral extrusion structure cannot normally output high-viscosity binders.

In order to convey a high-viscosity binder, in the related art, a heating device is provided in the storage tank. Before being stirred by the spiral extrusion structure, the binder is heated to a predetermined temperature and the temperature of the binder is kept constant, and the binder is conveyed by the spiral extrusion structure. Since the viscosity of the binder is reduced after heating, the spiral extrusion structure can smoothly convey the binder. For example, the automatic coating agitator tank disclosed in CN206121675U is used to convey a high-viscosity binder.

However, heating and conveying a high-viscosity binder by a spiral extrusion structure will bring the following problems:
1. Because the high-viscosity binder will denature after reaching a certain temperature, once the heating temperature is out of control, the properties of the high-viscosity binder will change, resulting in a decrease in the quality of the binder, and causing the quality reduction of a finished binder.
2. Because the spiral extrusion structure rotates at a high speed and the edge of the spiral extrusion structure is sharp, the shear force of the spiral extrusion structure will cut off the molecular chain of the binder, resulting in a further decrease in the viscosity of the binder. Because the molecular chain of the binder is cut off, the viscosity of the binder cannot reach an initial value again after the binder is cooled to room temperature, resulting in a decrease in the viscosity of the finished binder and a decrease in the quality of the slurry product.
3. Bubbles may be mixed into the binder when the binder is stirred by the spiral extrusion structure, resulting in the output binder mixed with bubbles. The bonding performance of the output binder is reduced, which further causes the quality of the binder to decrease.
   In another related art, the binder in the storage tank is first heated to reduce the viscosity of the binder, and then pumped out. For example, a high-viscosity material storage, heating and conveying system disclosed in CN216198754U is used to convey a high-viscosity binder. However, although the problem of binder chain breakage is avoided, the binder still needs to be heated, so there is also a risk of reducing the quality of the binder.

In view of the foregoing, there is an urgent need for a high-viscosity binder conveying system capable of suppressing the quality deterioration of high-viscosity binders at present.

To be noted, after diligently performing the inventiveness and novelty search of this solution, we also provide the following technical documents for reference:
1. CN207226133U - Sizing material storage and transportation system;
2. CN105966147A - Automatic chemical glue conveying device;
3. CN216198754U - High-viscosity material storage, heating and conveying system.

### SUMMARY

An objective of the present disclosure is to overcome the deficiencies in the prior art and provide a high-viscosity binder conveying system capable of suppressing the quality deterioration of high-viscosity binders and a lithium battery slurry production line.

The objective of the present disclosure is achieved through the following technical solution:

A high-viscosity binder conveying system, including a storage tank and a conveying pipeline, an input end of the conveying pipeline being connected to the bottom of the storage tank;
the high-viscosity binder conveying system further including a pressurizing device, wherein the pressurizing device is connected to the storage tank and configured to fill a positive pressure into the storage tank;
the conveying pipeline including an input pipe and an output pipe, wherein an input end of the input pipe is connected to the bottom of the storage tank; the high-viscosity binder conveying system further including a kneading peristaltic rotor pump, wherein an input end of the kneading peristaltic rotor pump is connected to an output end of the input pipe and an output end of the kneading peristaltic rotor pump is connected to an input end of the output pipe.

Compared with the prior art, the present disclosure at least has the following advantages:
1. Because conveying by the positive pressure formed by the pressurizing device does not generate heat, and less heat is generated during the normal operation of the kneading peristaltic rotor pump, the problem of thermal runaway of the binder is avoided, thereby further avoiding the quality deterioration of the binder due to thermal runaway and improving the quality of the high-viscosity binder.
2. Because the positive pressure formed by the pressurizing device does not shear the binder, but only provides a force for driving the material to move, and the kneading peristaltic rotor pump provides a relatively small shear force through the kneading force, the binder is pushed to the next process by the joint action of the kneading force and the positive pressure thrust, but not conveyed by a high-strength spiral extrusion structure alone. That is, the kneading peristaltic rotor pump has a small shear force on the binder, thereby reducing the degree of shearing of the binder, avoiding the problem of the molecular chain of the binder being cut, suppressing the quality deterioration of the high-viscosity binder, and improving the quality of the high-viscosity binder.
3. Because the positive pressure has a low stirring strength on the binder and the kneading peristaltic rotor pump conveys the binder by the kneading force, the kneading peristaltic rotor pump also has a low stirring strength on the binder. The binder is subjected to low-strength stirring during the conveying process, instead of high-strength stirring by the spiral extrusion structure, thereby reducing the gas mixed into the binder, suppressing the generation of bubbles in the binder and the quality deterioration of the high-viscosity binder, and improving the quality of the high-viscosity binder.
4. By introducing the kneading peristaltic rotor pump, the binder can be finely mixed by way of kneading. That is, the rotors play a secondary mixing role on the binder to increase the viscosity of the binder. As a result, the binder conveyed to the storage tank only needs to be premixed. In other words, the viscosity of the binder in the storage tank does not reach the peak value thereof. Because the viscosity of the binder in the storage tank does not reach the peak value thereof, before the kneading peristaltic rotor pump intervenes, the effect of driving the binder to move can be achieved by the positive pressure thrust alone, and the binder can be pushed to the kneading peristaltic rotor pump by the positive pressure thrust alone. After the kneading peristaltic rotor pump intervenes, the kneading peristaltic rotor pump kneads the binder so that the binder reaches the peak value thereof and is then output to the next process. As a result, the binder output to the next process can be used without secondary treatment.

### BRIEF DESCRIPTION OF THE DRAWINGS

In order to more clearly illustrate the technical solutions of the embodiments of the present disclosure, the drawings required for use in the embodiments will be explained briefly below. It should be appreciated that the following drawings only show certain embodiments of the present disclosure and should not be regarded as limiting the scope. For those of ordinary skill in the art, other relevant drawings may also be obtained based on these drawings without creative work.
FIG. 1 is a schematic structural diagram of a high-viscosity binder conveying system in an embodiment;
FIG. 2 is a cross-sectional diagram of the high-viscosity binder conveying system shown in FIG. 1;
FIG. 3 is an enlarged diagram of the high-viscosity binder conveying system at part A shown in FIG. 2;
FIG. 4 is another schematic structural diagram of the high-viscosity binder conveying system shown in FIG. 1;
FIG. 5 is an enlarged diagram of the high-viscosity binder conveying system at part B shown in FIG. 4; and
FIG. 6 is a partial schematic structural diagram of the high-viscosity binder conveying system shown in FIG. 1.

Reference numerals: 10. high-viscosity binder conveying system; 100. storage tank; 200. conveying pipeline; 210. input pipe; 211. inclined section; 212. output section; 220. output pipe; 300. pressurizing device; 400. kneading peristaltic rotor pump; 410. housing; 411. fine mixing chamber; 412. feed port; 413. discharge port; 420. rotor; 421. dented curved surface; 500. magnetic material remover; 510. stainless steel jacketed pipe; 511. demagnetization channel.

### DESCRIPTION OF THE EMBODIMENTS

The present disclosure provides a high-viscosity binder conveying system, including a storage tank and a conveying pipeline, an input end of the conveying pipeline being connected to a bottom of the storage tank; the high-viscosity binder conveying system further including a pressurizing device, the pressurizing device being connected to the storage tank and configured to fill a positive pressure into the storage tank. The conveying pipeline includes an input pipe and an output pipe, an input end of the input pipe is connected to the bottom of the storage tank. The high-viscosity binder conveying system further includes a kneading peristaltic rotor pump, an input end of the kneading peristaltic rotor pump is connected to an output end of the input pipe, and an output end of the kneading peristaltic rotor pump is connected to an input end of the output pipe. The present disclosure further provides a lithium battery slurry production line, including the high-viscosity binder conveying system described above.

In the high-viscosity binder conveying system and lithium battery slurry production line described above, because conveying by the positive pressure formed by the pressurizing device does not generate heat, and less heat is generated during the normal operation of the kneading peristaltic rotor pump, the problem of thermal runaway of the binder is avoided, thereby further avoiding the quality deterioration of the binder due to thermal runaway and improving the quality of the high-viscosity binder. Because the positive pressure formed by the pressurizing device does not shear the binder, but only provides a force for driving the material to move, and the kneading peristaltic rotor pump provides a relatively small shear force through the kneading force, the binder is pushed to the next process under the joint action of the kneading force and the positive pressure thrust, rather than being conveyed by a high-strength spiral extrusion structure alone. That is, the kneading peristaltic rotor pump has a small shear force on the binder, thereby reducing the degree of shearing of the binder, avoiding the problem of the molecular chain of the binder being cut, suppressing the quality deterioration of the high-viscosity binder, and improving the quality of the high-viscosity binder. Because the positive pressure has a low stirring strength on the binder and the kneading peristaltic rotor pump conveys the binder by the kneading force, the kneading peristaltic rotor pump also has a low stirring strength on the binder. The binder is subjected to low-strength stirring during the conveying process, instead of high-strength stirring by the spiral extrusion structure, thereby reducing the gas mixed into the binder, suppressing the generation of bubbles in the binder and the quality deterioration of the high-viscosity binder, and improving the quality of the high-viscosity binder. In this way, the positive pressure formed by the pressurizing device and the kneading peristaltic rotor pump work together to convey the high-viscosity binder, thereby avoiding the problem of thermal runaway and the problem of the molecular chain of the binder being cut, suppressing the generation of bubbles in the binder generating bubbles, and further suppressing the quality deterioration of the high-viscosity binder and improving the quality of the high-viscosity binder.

Further, by introducing the kneading peristaltic rotor pump, the binder can be finely mixed by way of kneading. That is, the rotors play a secondary mixing role on the binder to increase the viscosity of the binder. As a result, the binder conveyed to the storage tank only needs to be premixed. In other words, the viscosity of the binder in the storage tank does not reach the peak value thereof. Because the viscosity of the binder in the storage tank does not reach the peak value thereof, before the kneading peristaltic rotor pump intervenes, the effect of driving the binder to move can be achieved by the positive pressure thrust alone, and the binder can be pushed to the kneading peristaltic rotor pump by the positive pressure thrust alone. After the kneading peristaltic rotor pump intervenes, the kneading peristaltic rotor pump kneads the binder so that the binder reaches the peak value thereof and is then output to the next process. As a result, the binder output to the next process can be used without secondary treatment.

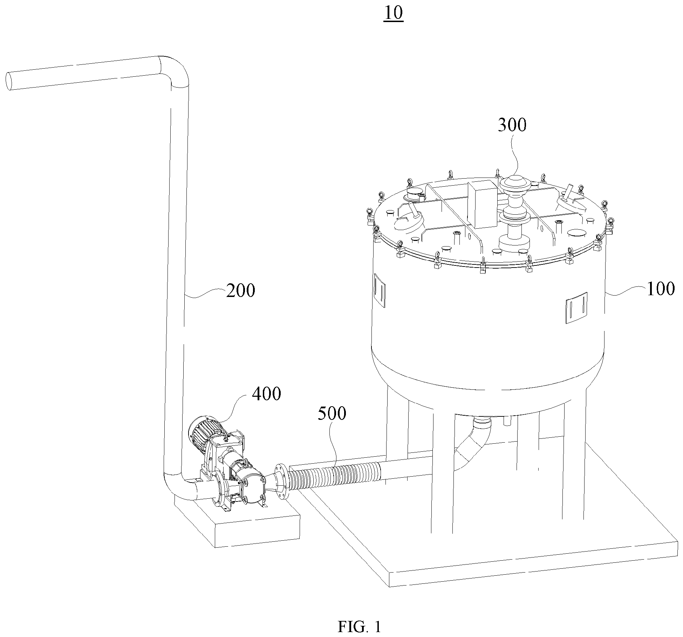

In order to better understand the technical solution and beneficial effects of the present disclosure, the present disclosure is further described in detail in combination with specific embodiments as follows:
As shown in FIGS. 1-3, a high-viscosity binder conveying system 10 in an embodiment includes a storage tank 100 and a conveying pipeline 200, an input end of the conveying pipeline 200 is connected to a bottom of the storage tank 100. The high-viscosity binder conveying system 10 further includes a pressurizing device 300. The pressurizing device 300 is connected to the storage tank 100 and configured to fill a positive pressure into the storage tank 100, and the gas filled by the pressurizing device 300 is an inert gas. The conveying pipeline 200 includes an input pipe 210 and an output pipe 220, and an input end of the input pipe 210 is connected to the bottom of the storage tank 100, so that a binder in the storage tank 100 is discharged into the input pipe 210 under the action of a positive pressure. The high-viscosity binder conveying system 10 further includes a kneading peristaltic rotor pump 400, an input end of the kneading peristaltic rotor pump 400 is connected to an output end of the input pipe 210, and an output end of the kneading peristaltic rotor pump 400 is connected to an input end of the output pipe 220. The binder in the input pipe 210 enters the output pipe 220 after passing through the kneading peristaltic rotor pump 400.

As shown in FIGS. 1-3, in this embodiment, the kneading peristaltic rotor pump 400 is configured to provide a kneading force and work together with a positive pressure to move the binder. When the high-viscosity binder conveying system 10 works, the binder is poured into the kneading peristaltic rotor pump 400 to expel the air out of the kneading peristaltic rotor pump 400. The pressurizing device 300 continuously fills the storage tank 100 with the inert gas to form a positive pressure in the storage tank 100. When the air pressure in the storage tank 100 reaches a predetermined value, a switch valve at the bottom of the storage tank 100 is opened to connect the bottom of the storage tank 100 with the input pipe 210, so that the positive pressure continuously pushes the binder to flow toward the input pipe 210, and the kneading peristaltic rotor pump 400 is started. When the binder enters the kneading peristaltic rotor pump 400, rotors of the kneading peristaltic rotor pump 400 provide a kneading force, so that the kneading force and the positive pressure thrust jointly push the binder, and then the binder passes through the output pipe 220 and enters the next process. In this way, under the action of the positive pressure and the kneading peristaltic rotor pump 400, the binder in the storage tank 100 is output to the next process after passing through the input pipe 210, the kneading peristaltic rotor pump 400 and the output pipe 220 in sequence. As will be appreciated, after the switch valve at the bottom of the storage tank 100 is opened, the pressurizing device 300 still fills the storage tank 100 with the inert gas to ensure that the positive pressure in the storage tank 100 remains constant, thereby avoiding the problem of the positive pressure thrust being weakened during the conveying process.

To be noted, the high-viscosity binder conveying system 10 of the present disclosure is able to convey a high-viscosity binder, specifically a binder with a viscosity of 800,000-1,000,000 cps, namely, liquid glue with a viscosity of 800,000-1,000,000 cps.

In the high-viscosity binder conveying system 10 described above, because conveying by the positive pressure formed by the pressurizing device 300 does not generate heat, and less heat is generated during the normal operation of the kneading peristaltic rotor pump 400, the problem of thermal runaway of the binder is avoided, thereby further avoiding the quality deterioration of the binder due to thermal runaway and improving the quality of the high-viscosity binder. Because the positive pressure formed by the pressurizing device 300 does not shear the binder, but only provides a force for driving the material to move, and the kneading peristaltic rotor pump 400 provides a relatively small shear force through the kneading force, the binder is pushed to the next process under the joint action of the kneading force and the positive pressure thrust, rather than being conveyed by a high-strength spiral extrusion structure alone. That is, the kneading peristaltic rotor pump 400 has a small shear force on the binder, thereby reducing the degree of shearing of the binder, avoiding the problem of the molecular chain of the binder being cut, suppressing the quality deterioration of the high-viscosity binder, and improving the quality of the high-viscosity binder. Because the positive pressure has a low stirring strength on the binder and the kneading peristaltic rotor pump 400 conveys the binder by the kneading force, the kneading peristaltic rotor pump 400 also has a low stirring strength on the binder. The binder is subjected to low-strength stirring during the conveying process, instead of high-strength stirring by the spiral extrusion structure, thereby reducing the gas mixed into the binder, suppressing the generation of bubbles in the binder and the quality deterioration of the high-viscosity binder, and improving the quality of the high-viscosity binder. In this way, the positive pressure formed by the pressurizing device 300 and the kneading peristaltic rotor pump 400 work together to convey the high-viscosity binder, thereby avoiding the problem of thermal runaway and the problem of the molecular chain of the binder being cut, suppressing the generation of bubbles in the binder generating bubbles, and further suppressing the quality deterioration of the high-viscosity binder and improving the quality of the high-viscosity binder.

Further, by introducing the kneading peristaltic rotor pump 400, the binder can be finely mixed by way of kneading. That is, the rotors of the kneading peristaltic rotor pump 400 play a secondary mixing role on the binder to increase the viscosity of the binder. As a result, the binder conveyed to the storage tank 100 only needs to be premixed. In other words, the viscosity of the binder in the storage tank 100 does not reach the peak value thereof. Because the viscosity of the binder in the storage tank 100 does not reach the peak value thereof, before the kneading peristaltic rotor pump 400 intervenes, the effect of moving the binder can be achieved by the positive pressure thrust alone, and the binder can be pushed to the kneading peristaltic rotor pump 400 by the positive pressure thrust alone. After the kneading peristaltic rotor pump 400 intervenes, the kneading peristaltic rotor pump 400 kneads the binder so that the binder reaches the peak value thereof and is then output to the next process. As a result, the binder output to the next process can be used without secondary treatment.

As will be appreciated, the positive pressure thrust also pushes the binder through the kneading peristaltic rotor pump 400 and in the meanwhile, the kneading peristaltic rotor pump 400 kneads the binder. The kneading force also provides a thrust toward a discharge port to a certain extent. Due to the positive pressure thrust, the binder does not flow back in the kneading peristaltic rotor pump 400, but is driven by the kneading peristaltic rotor pump 400 to move in an output direction, so that the conveying of the binder at the rear end can proceed normally.

To be emphasized, when the positive pressure is used alone to push a high-viscosity binder, due to the high viscosity of the high-viscosity binder, a large positive pressure is required to push the high-viscosity binder out; moreover, the high-viscosity binder is conveyed slowly by the positive pressure alone, which cannot meet the requirements of efficient production of enterprises. More importantly, this will cause over-high internal pressure of the storage tank 100 and the storage tank 100 is at risk of explosion. Once the storage tank 100 explodes, it will bring life danger to operators. Therefore, it is prohibited to convey a high-viscosity binder by a positive pressure alone.

To be emphasized further, when the kneading peristaltic rotor pump 400 is used alone to convey a high-viscosity binder, the rotors of the kneading peristaltic rotor pump 400 rotate and stir the binder. And because there is no positive pressure to push the binder, the binder cannot pass through the kneading peristaltic rotor pump 400. In other words, the kneading peristaltic rotor pump 400 cannot convey the binder. As a result, the binder stays in the kneading peristaltic rotor pump 400, and the rotors continuously stir the same binder. Because the rotors continuously stir the same binder, the binder in the kneading peristaltic rotor pump 400 becomes more and more viscous, eventually causing the kneading peristaltic rotor pump 400 to heat up due to idling, and even causing the kneading peristaltic rotor pump 400 to burn out. In view of the foregoing, the kneading peristaltic rotor pump 400 cannot be used alone to convey a high-viscosity binder.

As will be appreciated, the surface of the rotors of the kneading peristaltic rotor pump 400 in contact with the binder is relatively flat, and the kneading peristaltic rotor pump 400 provides a relatively small shear force through the kneading force and accordingly the shear force of the rotors on the binder is very small, so the rotor cannot cut the molecular chain of the binder when rotating. For example, for PVDF as a polymer with a long chain structure, the kneading peristaltic rotor pump 400 has a smaller shear force than the spiral extrusion structure, and has a better protective effect on the polymer binder with a long chain structure. However, the kneading peristaltic rotor pump 400, as a non-rigid shear and small torque transmission power source, may be combined with a positive pressure thrust to work together to achieve a high-viscosity material conveying effect that is substantially the same as that of a screw conveyor. As a contrast, the surface of the spiral extrusion structure in contact with a binder is relatively sharp, and the spiral extrusion structure will generate a shear force on the binder when rotating. Because the spiral extrusion structure rotates at a high speed and generates a large shear force, the spiral extrusion structure will cut the molecular chain of the binder when conveying the binder, resulting in an unrecoverable decrease in the viscosity of the binder.

To be noted, before entering the storage tank 100, the binder needs to be premixed to form a binder premix. That is, the storage tank 100 is configured to contain the binder premix. For example, the binder premix is a PVDF premix that is preliminary wetted and stirred. After being premixed, the PVDF premix already has a certain viscosity, but the viscosity does not reach a peak value before the PVDF premix is finely mixed by the kneading peristaltic rotor pump 400. After the PVDF premix is finely mixed by the kneading peristaltic rotor pump 400 (the PVDF premix is kneaded and finely mixed by the rotors in the kneading peristaltic rotor pump 400), the PVDF premix may be directly conveyed to the next process as a binder to be mixed with other materials. For example, in the preparation of an anode slurry for lithium batteries, the anode slurry generally comprises an anode active material, a conductive agent, an auxiliary agent and a binder. The binder output by the high-viscosity binder conveying system 10 of the present disclosure is deeply stirred and mixed with the anode active material, the conductive agent and the auxiliary agent by an anode slurry production equipment to obtain the anode slurry. For another example, in the preparation of a cathode slurry for lithium batteries, the cathode slurry generally comprises a cathode active material, a conductive agent, an auxiliary agent and a binder. The binder output by the high-viscosity binder conveying system 10 of the present disclosure is deeply stirred and mixed with the cathode active material, the conductive agent and the auxiliary agent by the cathode slurry production equipment to obtain the cathode slurry.

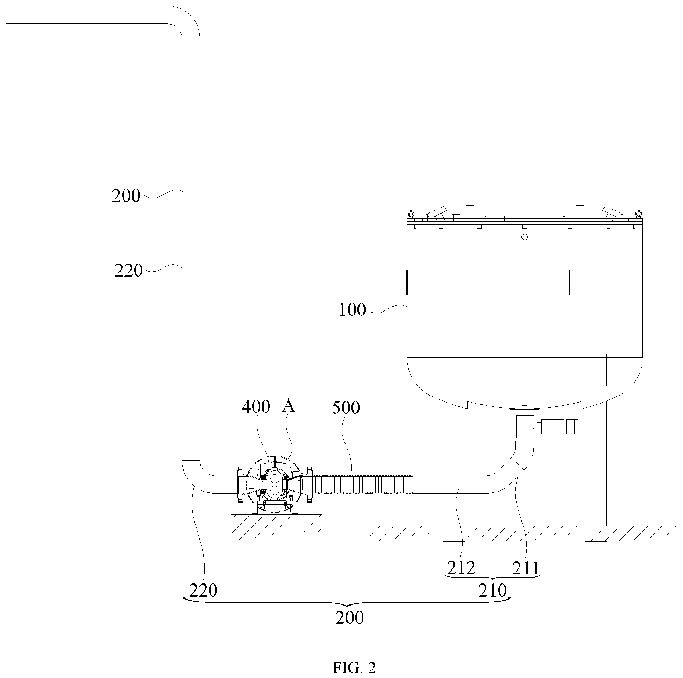

As shown in FIG. 2, in an embodiment, the input pipe 210 includes an inclined section 211 and an output section 212, a first end of the inclined section 211 is connected to the bottom of the storage tank 100, the inclined section 211 is arranged in an inclined manner, a first end of the output section 212 is connected to a second end of the inclined section 211, a second end of the output section 212 is connected to the input end of the kneading peristaltic rotor pump 400. In this embodiment, because the inclined section 211 is arranged in an inclined manner, the discharge resistance of the storage tank 100 is reduced, and the smoothness of the discharge of the high-viscosity binder in the storage tank 100 is improved.

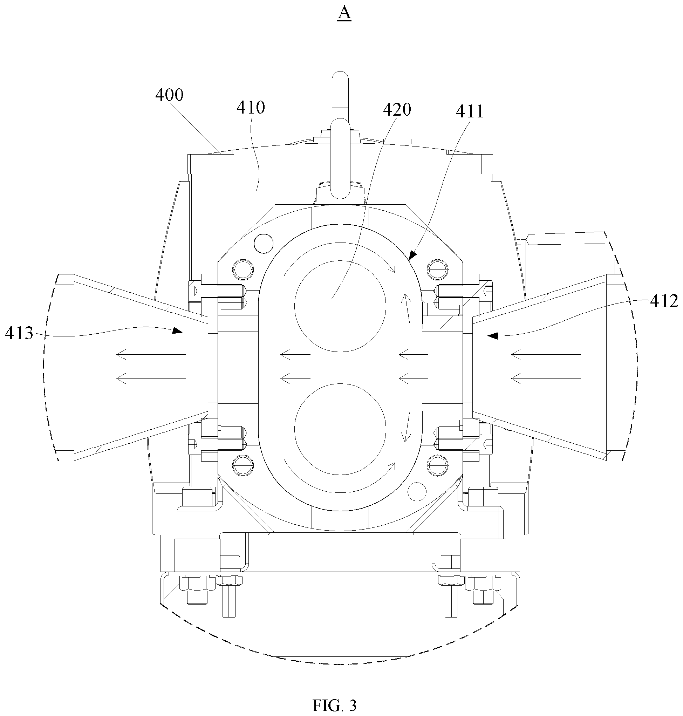

As shown in FIG. 3, in an embodiment, the output section 212 is arranged in a horizontally extending manner, so that there is an angle between the output section 212 and the inclined section 211, thereby improving the structural compactness of the input pipe 210 and further improving the structural compactness of the high-viscosity binder conveying system 10.

As shown in FIG. 3, in an embodiment, the angle between the inclined section 211 and the horizontal plane is within a range of 30° to 60°, so that the storage tank 100 can discharge the high-viscosity binder more easily.

As shown in FIG. 3, in an embodiment, the angle between the inclined section 211 and the horizontal plane is 45°, so that the storage tank 100 can discharge the high-viscosity binder more easily. Of course, in another embodiment, the angle between the inclined section 211 and the horizontal plane may also be 30° or 60°. Of course, in other embodiments, the angle between the inclined section 211 and the horizontal plane may also have other values, which are not listed in the present disclosure.

As shown in FIG. 3, in an embodiment, the kneading peristaltic rotor pump 400 includes a housing 410 and a plurality of rotors 420, the housing 410 is provided with a fine mixing chamber 411, and the plurality of rotors 420 are all received in the fine mixing chamber 411. The housing 410 is also provided with a feed port 412 and a discharge port 413, which are respectively connected to the fine mixing chamber 411 and are respectively located on opposite sides of the rotors 420, the feed port 412 is connected to the output end of the input pipe 210, the rotation axes of the rotors 420 are perpendicular to the flow direction of the material in the input pipe 210, and the discharge port 413 is connected to the input end of the output pipe 220.

As shown in FIG. 3, in this embodiment, the binder is driven by the positive pressure thrust to enter the fine mixing chamber 411 through the feed port 412. As the rotors 420 rotate, the rotors 420 knead the binder, and the kneading force also provides a thrust toward the discharge port 413 to a certain extent. Due to the positive pressure thrust, the binder does not flow back in the fine mixing chamber 411, but is driven by the rotors 420 to move toward the discharge port 413, so that the conveying of the binder at the rear end can proceed normally. Because the rotation axes of the rotors 420 are perpendicular to the flow direction of the material in the input pipe 210, the rotors 420 knead the binder more easily, thereby improving the kneading effect of the rotors 420 on the binder.

As will be appreciated, during the process of the rotors 420 kneading the binder, the rotors 420 function to knead and finely mix the binder. That is, the rotors 420 play a secondary mixing role on the binder to increase the viscosity of the binder. As a result, the binder conveyed to the storage tank 100 only needs to be premixed. In other words, the viscosity of the binder in the storage tank 100 does not reach the peak value thereof. Because the viscosity of the binder in the storage tank 100 does not reach the peak value thereof, before the kneading peristaltic rotor pump 400 intervenes, the effect of moving the binder can be achieved by the positive pressure thrust alone, and the binder can be pushed to the kneading peristaltic rotor pump 400 by the positive pressure thrust alone. After the kneading peristaltic rotor pump 400 intervenes, the kneading peristaltic rotor pump 400 kneads the binder so that the binder reaches the peak value thereof and is output to the next process. As a result, the binder output to the next process can be used directly.

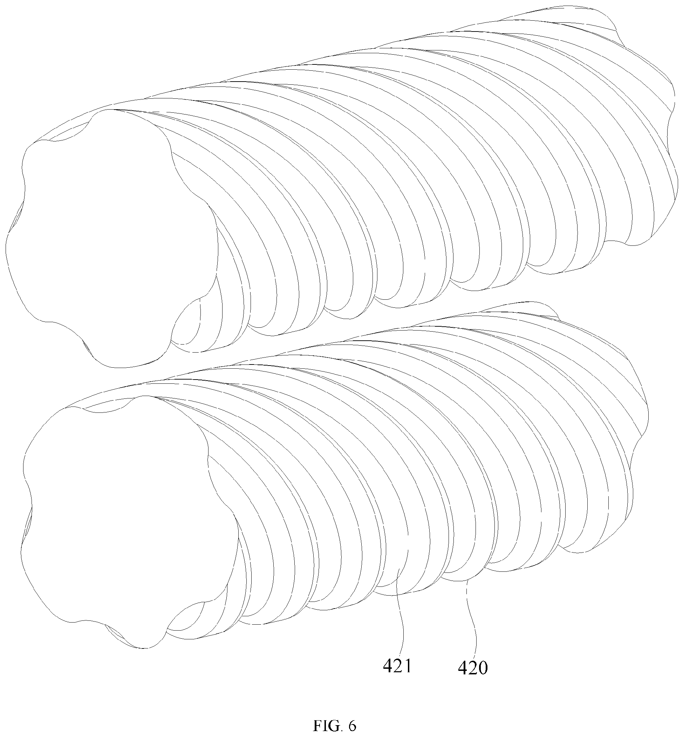

As shown in FIG. 3 and FIG. 6, in an embodiment, the rotors 420 are shaft-shaped, dented curved surfaces 421 are provided on the surface of each rotor 420, and the dented curved surfaces 421 are spiral-shaped. In this embodiment, a kneading force is provided between adjacent rotors 420, and the binder is kneaded by the kneading force so that the viscosity of the binder reaches a peak value. The kneading force also provides a thrust toward the discharge port 413 so that the binder moves toward the discharge port 413. When the rotors 420 rotate, the binder is embedded in the dented curved surfaces 421. In this way, the adhesion of the binder to the rotors 420 is enhanced and the problem of the binder slipping on the rotors 420 is suppressed, and the good kneading effect of adjacent rotors 420 is achieved, thereby ensuring that the viscosity of the binder reaches a peak value.

As will be appreciated, in the absence of positive pressure, the rotors 420 also provide a force to drive the binder to flow back, causing the binder to stay in the kneading peristaltic rotor pump 400 and rotate round and round; in the presence of a positive pressure thrust, the force of the rotors 420 to drive the binder to flow back is eliminated by the positive pressure thrust, causing the binder to move toward the discharge port 413 under the action of the bonding force and the positive pressure thrust and realizing the normal conveying of the binder at the rear end. Further, because the dented surfaces are curved surfaces, the surfaces of the rotors 420 do not have sharp lines, thereby reducing the shear force of the rotors 420 on the binder and avoiding the problem of the rotors 420 cutting the molecular chain of the binder.

As shown in FIG. 6, further, an inner wall of each dented curved surface 421 includes an arc-shaped curved surface and an arc-shaped transition surface, the arc-shaped curved surface is concave inward in the outer side surface of the rotor, and the arc-shaped transition surface is respectively connected to the peripheral edge of the arc-shaped curved surface and the outer side surface of the rotor.

As shown in FIG. 6, further, the size of the arc-shaped curved surfaces gradually increases in a direction close to the outer side of the rotor, so that the binder easily come into the dented curved surfaces 421.

As shown in FIG. 6, further, a plurality of dented curved surfaces 421 are provided on each rotor 420, and the plurality of dented curved surfaces 421 of each rotor 420 are arranged side by side and spaced apart. In this embodiment, the binder is kneaded by means of the dented curved surfaces 421, thereby improving the kneading efficiency.

As shown in FIG. 3, in an embodiment, two rotors 420 are provided and spaced apart. The two rotors 420 rotate in opposite directions, and a side of one of the rotors 420 adjacent to the other rotor 420 rotates toward the discharge port 413, so that the two rotors 420 form a kneading force. In other words, the space between the two rotors 420 is a kneading position. The kneading force pushes the binder to move toward the discharge port 413 while kneading the binder. In this embodiment, because the two rotors 420 rotate in opposite directions, the two rotors 420 work together to knead the binder at the kneading position, thereby increasing the kneading force, improving the kneading efficiency and the efficiency of the binder passing through the kneading peristaltic rotor pump 400. In other words, the conveying efficiency is improved.

In an embodiment, the surface of each rotor 420 is coated with a wear-resistant layer to suppress the wear of the rotors 420, thereby suppressing the problem of magnetic foreign matter in the rotor 420 being mixed into the binder, further suppressing the quality deterioration of the binder, and improving the quality of the binder.

In an embodiment, the wear-resistant layer is a ceramic layer. Of course, in other embodiments, the wear-resistant layer may also be a gas infiltration hardened wear-resistant coating layer, a hard alloy coating layer, a tungstate coating layer or other conventional wear-resistant layers.

As shown in FIG. 2, in an embodiment, the pressurizing device 300 is arranged at a top of the storage tank 100, so that the airflow injected by the pressurizing device 300 is directed toward the bottom of the storage tank 100, which facilitates improving the effect of the pressurizing device 300 in pushing the high-viscosity binder.

As will be appreciated, magnetic foreign matter will inevitably be mixed into the high-viscosity binder during the production process. This is a problem that cannot be avoided in the industry for the time being. With the increase of magnetic foreign matter in the high-viscosity binder, the performance of the battery will decrease. In view of the foregoing, how to reduce the content of magnetic foreign matter in the high-viscosity binder has always been a problem that needs to be solved urgently in the industry.

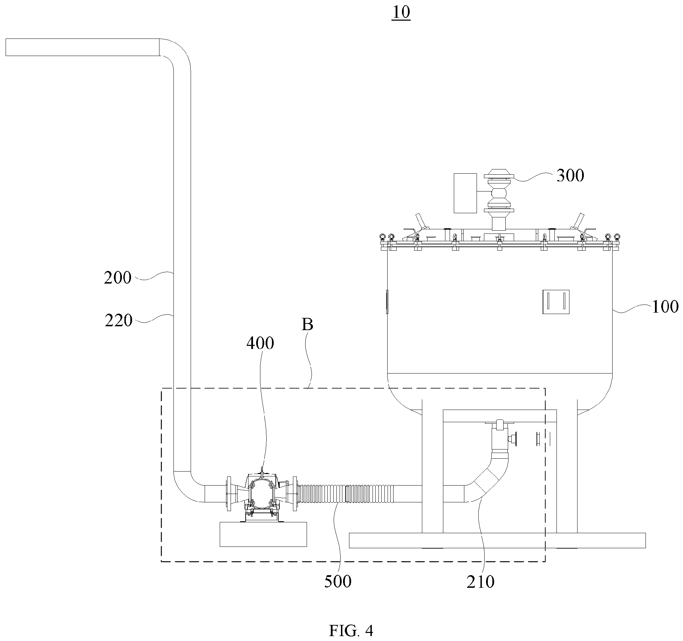

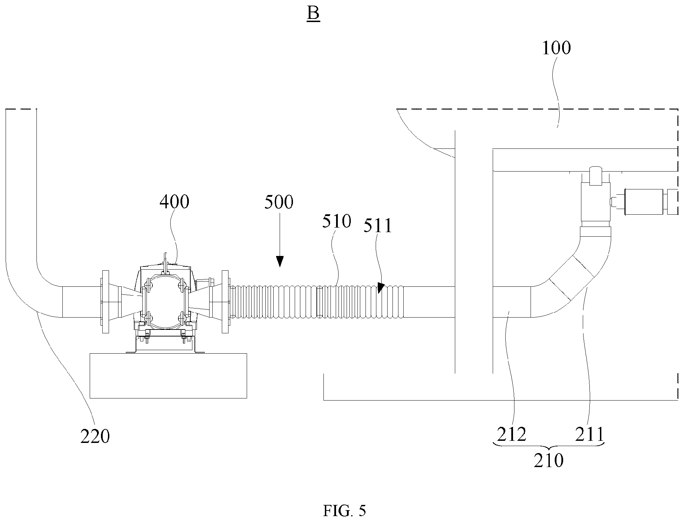

In order to reduce the content of magnetic foreign matter in the high-viscosity binder, as shown in FIG. 4 and FIG. 5, in an embodiment, the high-viscosity binder conveying system 10 further includes a magnetic material remover 500, the magnetic material remover 500 includes a stainless steel jacketed pipe 510 and a permanent magnet, the stainless steel jacketed pipe 510 has a jacketed structure, the permanent magnet is arranged in the jacketed structure, and a demagnetization channel 511 is formed in the stainless steel jacketed pipe 510; one end of the stainless steel jacketed pipe 510 is connected to the output end of the input pipe 210, and the other end of the stainless steel jacketed pipe 510 is connected to the input end of the kneading peristaltic rotor pump 400, so that the output end of the input pipe 210 is connected to the input end of the kneading peristaltic rotor pump 400 by the demagnetization channel 511. In this embodiment, when the material passes through the demagnetization channel 511, the magnetic material remover 500 absorbs the magnetic foreign matter of the binder, so that the content of magnetic foreign matter in the binder passing through the demagnetization channel 511 is reduced, thereby suppressing the adverse effects of magnetic foreign matter on battery performance.

As will be appreciated, the binder before passing through the kneading peristaltic rotor pump 400 is defined as a binder premix, and the binder after passing through the kneading peristaltic rotor pump 400 is defined as a binder fine-mix. To be emphasized, because the kneading peristaltic rotor pump 400 may cause the molecular chains of the binder to entangle with each other (that is, after the secondary stirring and mixing by the kneading peristaltic rotor pump 400, the binder may be further dispersed and wetted, and according to many test evidences and common knowledge, the viscosity of the binder does increase to a large extent), the viscosity of the binder is increased. When the viscosity of the binder increases, it will be more difficult for the magnetic material remover 500 to absorb the magnetic foreign matter in the binder.

In view of the foregoing, the magnetic material remover 500 is arranged between the input pipe 210 and the kneading peristaltic rotor pump 400, so that the magnetic material remover 500 absorbs the magnetic foreign matter in the binder before the viscosity of the binder increases, thereby improving the demagnetization effect of the magnetic material remover 500. This means that the viscosity of the binder fine-mix is greater than that of the binder premix, and the magnetic material (magnetic impurities that need to be removed by the magnetic material remover) is dispersed in the binder. When the magnetic material is absorbed from the binder to the inner wall of the demagnetization channel 511, this process should be carried out in the presence of a magnetic field. As will be appreciated, it is more difficult for the magnetic material to overcome the fluid resistance and move in a system with a greater viscosity. By connecting one end of the stainless steel jacketed pipe 510 to the output end of the input pipe 210, the input pipe 510 is connected to an input end of the demagnetization channel 511, and by connecting the other end of the stainless steel jacketed pipe 510 to the input end of the kneading peristaltic rotor pump 400, the output end of the demagnetization channel 511 is connected to the input end of the kneading peristaltic rotor pump 400, and then the output end of the input pipe 210 is connected to the input end of the kneading peristaltic rotor pump 400 by the demagnetization channel 511. In this way, when the binder is in a state of low viscosity (binder premix), the magnetic material adsorption process can be completed under the action of the magnetic field of the magnetic material remover 500, thereby reducing the magnetic field strength of the magnetic material remover 500 (that is, reducing the length of the demagnetization channel 511 and/or the amount of permanent magnetic material used, etc.), and simultaneously improving the removal efficiency and degree of magnetic material.

As shown in FIG. 5, in an embodiment, the stainless steel jacketed pipe 510 is detachably connected to the input pipe 210 and the kneading peristaltic rotor pump 400, respectively. In this embodiment, after the high-viscosity binder conveying system 10 completes a certain amount of conveying work, a large amount of magnetic foreign matter will be accumulated on the inner wall of the demagnetization channel 511. In order to avoid the adverse effects of the accumulated magnetic foreign matter on the conveying work, the magnetic material remover 500 is detached from the conveying system first, and then the magnetic foreign matter in the demagnetization channel 511 is cleaned. After the cleaning operation is completed, the magnetic material remover 500 is installed in the conveying system. In this way, the magnetic material remover 500 can continue to work for demagnetization, and the adverse effect of accumulated magnetic foreign matter on the binder can also be avoided.

The present disclosure further provides a lithium battery slurry production line for manufacturing glue, i.e., a binder, and the lithium battery slurry production line includes the high-viscosity binder conveying system described in any of the above embodiments. As shown in FIGS. 1-3, in an embodiment, the high-viscosity binder conveying system 10 includes a storage tank 100 and a conveying pipeline 200, an input end of the conveying pipeline 200 is connected to the bottom of the storage tank 100. The high-viscosity binder conveying system 10 further includes a pressurizing device 300. The pressurizing device 300 is connected to the storage tank 100 and configured to fill a positive pressure into the storage tank 100, and the gas filled by the pressurizing device 300 is an inert gas. The conveying pipeline 200 includes an input pipe 210 and an output pipe 220, and an input end of the input pipe 210 is connected to the bottom of the storage tank 100, so that a binder in the storage tank 100 is discharged into the input pipe 210 under the action of a positive pressure. The high-viscosity binder conveying system 10 further includes a kneading peristaltic rotor pump 400, an input end of the kneading peristaltic rotor pump 400 is connected to an output end of the input pipe 210, and an output end of the kneading peristaltic rotor pump 400 is connected to an input end of the output pipe 220. The binder in the input pipe 210 enters the output pipe 220 after passing through the kneading peristaltic rotor pump 400.

As shown in FIGS. 1-3, in this embodiment, the kneading peristaltic rotor pump 400 is configured to provide a kneading force and work together with a positive pressure to move the binder. When the high-viscosity binder conveying system 10 works, the binder is poured into the kneading peristaltic rotor pump 400 to expel the air out of the kneading peristaltic rotor pump 400. The pressurizing device 300 continuously fills the storage tank 100 with the inert gas to form a positive pressure in the storage tank 100. When the air pressure in the storage tank 100 reaches a predetermined value, a switch valve at the bottom of the storage tank 100 is opened to connect the bottom of the storage tank 100 with the input pipe 210, so that the positive pressure continuously pushes the binder to flow toward the input pipe 210, and the kneading peristaltic rotor pump 400 is started. When the binder enters the kneading peristaltic rotor pump 400, rotors of the kneading peristaltic rotor pump 400 provide a kneading force, so that the kneading force and the positive pressure thrust jointly push the binder, and then the binder passes through the output pipe 220 and enters the next process. In this way, under the action of the positive pressure and the kneading peristaltic rotor pump 400, the binder in the storage tank 100 is output to the next process after passing through the input pipe 210, the kneading peristaltic rotor pump 400 and the output pipe 220 in sequence. As will be appreciated, after the switch valve at the bottom of the storage tank 100 is opened, the pressurizing device 300 still fills the storage tank 100 with the inert gas to ensure that the positive pressure in the storage tank 100 remains constant, thereby avoiding the problem of the positive pressure thrust being weakened during the conveying process.

To be noted, the high-viscosity binder conveying system 10 of the present disclosure can convey a high-viscosity binder, specifically a binder with a viscosity of 800,000-1,000,000 cps, namely, liquid glue with a viscosity of 800,000-1,000,000 cps.

In the lithium battery slurry production line described above, because conveying by the positive pressure formed by the pressurizing device 300 does not generate heat, and less heat is generated during the normal operation of the kneading peristaltic rotor pump 400, the problem of thermal runaway of the binder is avoided, thereby further avoiding the quality deterioration of the binder due to thermal runaway and improving the quality of the high-viscosity binder. Because the positive pressure formed by the pressurizing device 300 does not shear the binder, but only provides a force for driving the material to move, and the kneading peristaltic rotor pump 400 provides a relatively small shear force through the kneading force, the binder is pushed to the next process under the joint action of the kneading force and the positive pressure thrust, rather than being conveyed by a high-strength spiral extrusion structure alone. That is, the kneading peristaltic rotor pump 400 has a small shear force on the binder, thereby reducing the degree of shearing of the binder, avoiding the problem of the molecular chain of the binder being cut, suppressing the quality deterioration of the high-viscosity binder, and improving the quality of the high-viscosity binder. Because the positive pressure has a low stirring strength on the binder and the kneading peristaltic rotor pump 400 conveys the binder by the kneading force, the kneading peristaltic rotor pump 400 also has a low stirring strength on the binder. The binder is subjected to low-strength stirring during the conveying process, instead of high-strength stirring by the spiral extrusion structure, thereby reducing the gas mixed into the binder, suppressing the generation of bubbles in the binder and the quality deterioration of the high-viscosity binder, and improving the quality of the high-viscosity binder. In this way, the positive pressure formed by the pressurizing device 300 and the kneading peristaltic rotor pump 400 work together to convey the high-viscosity binder, thereby avoiding the problem of thermal runaway and the problem of the molecular chain of the binder being cut, suppressing the generation of bubbles in the binder generating bubbles, and further suppressing the quality deterioration of the high-viscosity binder and improving the quality of the high-viscosity binder.

Further, by introducing the kneading peristaltic rotor pump 400, the binder can be finely mixed by way of kneading. That is, the rotors of the kneading peristaltic rotor pump 400 play a secondary mixing role on the binder to increase the viscosity of the binder. As a result, the binder conveyed to the storage tank 100 only needs to be premixed. In other words, the viscosity of the binder in the storage tank 100 does not reach the peak value thereof. Because the viscosity of the binder in the storage tank 100 does not reach the peak value thereof, before the kneading peristaltic rotor pump 400 intervenes, the effect of moving the binder can be achieved by the positive pressure thrust alone, and the binder can be pushed to the kneading peristaltic rotor pump 400 by the positive pressure thrust alone. After the kneading peristaltic rotor pump 400 intervenes, the kneading peristaltic rotor pump 400 kneads the binder so that the binder reaches the peak value thereof and is then output to the next process. As a result, the binder output to the next process can be used without secondary treatment.

The above embodiments merely express several implementation methods of the present disclosure, and the description thereof is relatively specific and detailed, but it should not be construed as limiting the scope of the disclosed patent. It should be noted that those of ordinary skill in the art may make variations and improvements without departing from the concept of the present disclosure, and these all should fall within the scope of the present disclosure. Therefore, the scope of the present disclosure shall be based on the appended claims.

## Claims

1. A high-viscosity binder conveying system, comprising a storage tank and a conveying pipeline, an input end of the conveying pipeline being connected to a bottom of the storage tank, **characterized in that**,
the high-viscosity binder conveying system further comprises a pressurizing device, wherein the pressurizing device is connected to the storage tank and configured to fill a positive pressure into the storage tank;
the conveying pipeline comprises an input pipe and an output pipe, wherein an input end of the input pipe is connected to the bottom of the storage tank; the high-viscosity binder conveying system further comprises a kneading peristaltic rotor pump, wherein an input end of the kneading peristaltic rotor pump is connected to an output end of the input pipe, and an output end of the kneading peristaltic rotor pump is connected to an input end of the output pipe.

2. The high-viscosity binder conveying system according to claim 1, **characterized in that**, the input pipe comprises an inclined section and an output section, a first end of the inclined section is connected to the bottom of the storage tank, the inclined section is arranged in an inclined manner, a first end of the output section is connected to a second end of the inclined section, a second end of the output section is connected to the input end of the kneading peristaltic rotor pump.

3. The high-viscosity binder conveying system according to claim 2, **characterized in that**, the output section is arranged in a horizontally extending manner.

4. The high-viscosity binder conveying system according to claim 2, **characterized in that**, an angle between the inclined section and the horizontal plane is within a range of 30° to 60°.

5. The high-viscosity binder conveying system according to claim 1, **characterized in that**, the kneading peristaltic rotor pump comprises a housing and a plurality of rotors, the housing is provided with a fine mixing chamber, and the plurality of rotors are all received in the fine mixing chamber;
the housing is further provided with a feed port and a discharge port, which are respectively connected to the fine mixing chamber and are respectively located on opposite sides of the rotors, the feed port is connected to the output end of the input pipe, rotation axes of the rotors are perpendicular to the flow direction of material in the input pipe, and the discharge port is connected to the input end of the output pipe.

6. The high-viscosity binder conveying system according to claim 5, **characterized in that**, the rotors are shaft-shaped, dented curved surfaces are provided on the surface of each rotor, and the dented curved surfaces are spiral-shaped.

7. The high-viscosity binder conveying system according to claim 6, **characterized in that**, the number of the rotors is two, the two rotors are provided and are spaced apart; the two rotors rotate in opposite directions, and a side of one of the rotors adjacent to the other rotor rotates toward the discharge port.

8. The high-viscosity binder conveying system according to claim 1, **characterized in that**, the high-viscosity binder conveying system further comprises a magnetic material remove, the magnetic material remover comprises a stainless steel jacketed pipe and a permanent magnet, the stainless steel jacketed pipe has a jacketed structure, the permanent magnet is arranged in the jacketed structure, and a demagnetization channel is formed in the stainless steel jacketed pipe; one end of the stainless steel jacketed pipe is connected to the output end of the input pipe, and the other end of the stainless steel jacketed pipe is connected to the input end of the kneading peristaltic rotor pump, so that the output end of the input pipe is connected to the input end of the kneading peristaltic rotor pump by the demagnetization channel.

9. The high-viscosity binder conveying system according to claim 1, **characterized in that**, the pressurizing device is arranged at a top of the storage tank.

10. A lithium battery slurry production line, **characterized by**, comprising the high-viscosity binder conveying system according to any one of claims 1 to 9.
